# EUROPEAN PATENT APPLICATION

(11) **EP 4 714 760 A2**
(43) Date of publication of application: **25.03.2026**
(21) Application number: 25199574.2
(22) Date of filing: 02.09.2025
(51) Int. Cl.: B60T 7/04, B60L 58/10, B60T 17/22, B60W 60/00, H02J 7/00

(54) **AUTOMOTIVE STORAGE DEVICE, VEHICLE SYSTEM INCLUDING AUTOMOTIVE STORAGE DEVICE, AND VEHICLE INCLUDING THE SAME**

(30) Priority: 03.09.2024 KR 20240119269
(71) Applicant: Samsung Electronics Co., Ltd., Suwon-si, Gyeonggi-do 16677 (KR)
(72) Inventor: LEE, Seungcheol, Suwon-si (KR)
(74) Representative: Marks & Clerk LLP

(57) **Abstract**

A vehicle system may include a sensor configured to detect at least one of a position of a brake pedal, a state of a plurality of battery cells, or a first image outside the vehicle and generate detection information, and an automotive storage device including a storage controller and a non-volatile memory device, the storage controller configured to generate vehicle information based on detection information, the vehicle information including at least one of first braking information, state-of-charge information of the plurality of battery cells, or first object information outside the vehicle, the non-volatile memory device configured to store the detection information and the vehicle information according to a control of the storage controller.

## Description

### BACKGROUND

The present disclosure relates to automotive storage devices, vehicle systems including an automotive storage device, and vehicles including the same.

As vehicles become more autonomous, the burden of proof for accidents is shifting from drivers to manufacturers. Accordingly, an automotive storage device is changing from devices that store the minimum information desired for accident analysis, such as event data recorder (EDR), to devices that store various types of information, from information detected by sensors related to the vehicle's driving to information generated by the vehicle's internal operations.

### SUMMARY

Some embodiments of the present disclosure provide automotive storage devices, vehicle systems including an automotive storage device, and/or vehicles including the same capable of efficiently processing data internally generated in a vehicle.

A vehicle system according to an embodiment includes, a sensor configured to detect at least one of, a position of a brake pedal, a state of a plurality of battery cells, or a first image outside the vehicle, and generate detection information, and an automotive storage device including a storage controller and a non-volatile memory device, the storage controller configured to generate vehicle information based on detection information, the vehicle information including at least one of first braking information, state-of-charge information of the plurality of battery cells, or first object information outside the vehicle the, the non-volatile memory device configured to store the detection information and the vehicle information according to a control of the storage controller.

A vehicle system according to an embodiment includes a brake, an autonomous driving system configured to control driving of a vehicle, a sensor configured to detect at least one of a position of a brake pedal or a first image outside the vehicle and generate detection information, and an automotive storage device including a storage controller and a non-volatile memory device, the storage controller configured to generate vehicle information based on the detection information and provide the vehicle information to the brake or the autonomous driving system, the vehicle information including at least one of first braking information relating to a speed of the vehicle or first object information relating to a first object displayed in the first image, the non-volatile memory device configured to store the detection information and the vehicle information according to a control of the storage controller.

A vehicle according to an embodiment includes a brake, a battery pack including a plurality of battery cells, a sensor configured to generate detection information based on at least one of a position of a brake pedal or a state of the plurality of battery cells, a brake control unit configured to control the brake based on the detection information, and an automotive storage device including a storage controller and a non-volatile memory device, the storage controller configured to generate vehicle information based on the detection information and detect a defect of the brake control unit or the battery pack based on the vehicle information, the vehicle information including at least one of braking information or state-of-charge information of the plurality of battery cells, the non-volatile memory device configured to store the detection information and the vehicle information according to a control of the storage controller.

At least some of the above and other features of the invention are set out in the claims.

### BRIEF DESCRIPTION OF THE DRAWINGS

FIG. 1 is a drawing for explaining a vehicle including an automotive storage device according to an embodiment.
FIG. 2 is a drawing for explaining a vehicle system according to an embodiment.
FIG. 3 is a drawing for explaining an automotive storage device according to an embodiment.
FIG. 4 is a drawing for explaining an automotive storage device configured to generate vehicle information based on detection information received from a sensor and store the detection information and the vehicle information according to an embodiment.
FIG. 5 is a drawing for explaining an automotive storage device configured to control a brake based on position information of a brake pedal according to an embodiment.
FIG. 6 is a drawing for explaining an automotive storage device configured to generate state-of-charge information and state-of-health information based on state information of a battery cell according to an embodiment.
FIG. 7 is a drawing for explaining an automotive storage device configured to generate life-span information based on state information of a battery cell according to an embodiment.
FIG. 8 is a drawing for explaining an automotive storage device configured to control a battery junction box according to an embodiment.
FIG. 9 is a drawing for explaining an automotive storage device configured to generate first object information based on an image inside or outside the vehicle according to an embodiment.
FIG. 10 is a drawing for explaining an autonomous driving system according to an embodiment.
FIG. 11 is a drawing for explaining an autonomous driving system configured to control a speed of a vehicle based on first object information and second object information according to an embodiment.
FIG. 12 is a drawing for explaining an automotive storage device and an autonomous driving system connected to a plurality of cameras according to an embodiment.
FIG. 13 is a drawing for explaining an automotive storage device including a plurality of storage controllers according to an embodiment.
FIG. 14 is a flowchart for explaining an automotive storage device configured to generate vehicle information based on detection information received from a sensor and store the detection information and the vehicle information according to an embodiment.
FIG. 15 is a flowchart for explaining an automotive storage device configured to control a brake based on position information of a brake pedal according to an embodiment.
FIG. 16 is a flowchart for explaining an automotive storage device configured to detect a defect of a plurality of battery cells based on state information of a plurality of battery cells according to an embodiment.
FIG. 17 is a flowchart for explaining vehicle system configured to control autonomous driving of a vehicle based on first object information generated by an automotive storage device and second object information generated by an autonomous driving system according to an embodiment.
FIG. 18 is a drawing for explaining a non-volatile memory device according to an embodiment.

### DETAILED DESCRIPTION

The present disclosure will be described more fully hereinafter with reference to the accompanying drawings, in which some embodiments of the disclosure are illustrated. As those skilled in the art would realize, the described embodiments may be modified in various different ways, without departing from the scope of the present disclosure.

The drawings and description are to be regarded as illustrative in nature and not restrictive, and like reference numerals designate like elements throughout the specification.

In addition, unless explicitly described to the contrary, the word "comprise" and variations such as "comprises" or "comprising", will be understood to imply the inclusion of stated elements but not the exclusion of any other elements.

As used herein, expressions such as "one of," "any one of," and "at least one of," when preceding a list of elements, modify the entire list of elements and do not modify the individual elements of the list. Thus, for example, both "at least one of A, B, or C" and "at least one of A, B, and C" mean either A, B, C or any combination thereof. Likewise, A and/or B means A, B, or A and B.

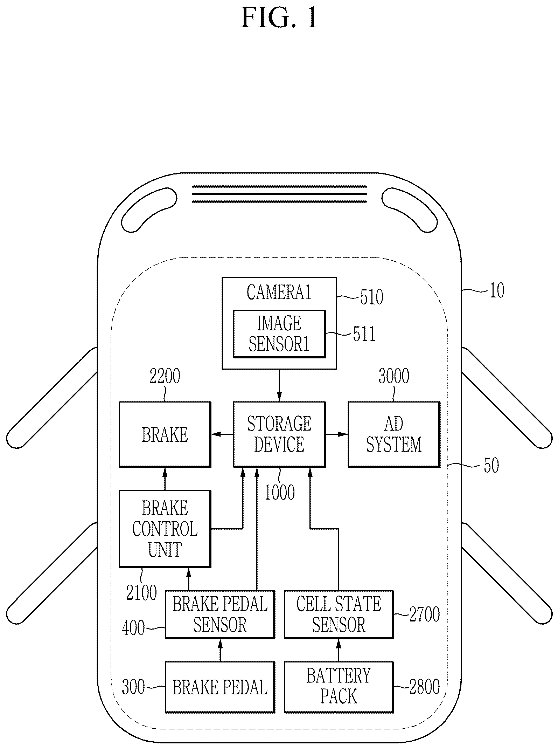

FIG. 1 is a drawing for explaining a vehicle including an automotive a storage device according to an embodiment.

Referring to FIG. 1, a vehicle 10 may include a vehicle system 50. The vehicle system 50 may include a brake pedal 300, a brake pedal sensor 400, a first camera 510, an automotive storage device (also referred to as a storage device) 1000, a brake control unit 2100, a brake 2200, a cell state sensor 2700, a battery pack 2800, and autonomous driving (AD) system 3000.

In an embodiment, the brake pedal sensor 400 may detect a position of the brake pedal 300. The brake pedal sensor 400 may generate a brake pedal position information by detecting the position of the brake pedal 300, and may provide the brake pedal position information to the brake control unit 2100 and the automotive storage device 1000. In other words, the brake pedal sensor 400 may detect the position of the brake pedal 300 and generate a brake pedal position information, and may provide the brake pedal position information to the brake control unit 2100 and the automotive storage device 1000.

In an embodiment, the brake control unit 2100 may control the brake 2200. In an embodiment, the brake control unit 2100 may determine a braking value for the speed of the vehicle 10 to decelerate based on the brake pedal position information, and may control the brake 2200 to perform a braking operation in which the brake decreases the rotating speed of the wheel of the vehicle 10 according to the braking value. The brake 2200 may decrease the rotating speed of the wheel of the vehicle based on the braking value. In an embodiment, the brake control unit 2100 may provide a braking information on or associate with the braking value to the automotive storage device 1000.

In an embodiment, the cell state sensor 2700 may detect a state of a plurality of battery cells included in the battery pack 2800. In an embodiment, the cell state sensor 2700 may detect the voltage, current, and temperature of the plurality of battery cells. In an embodiment, the cell state sensor 2700 may provide a cell state information on the state of the plurality of battery cells to the automotive storage device 1000.

In an embodiment, the first camera 510 may include a first image sensor 511. In an embodiment, the first image sensor 511 may detect the environment inside or outside the vehicle 10. In an embodiment, the first image sensor 511 may generate image information by detecting an image inside or outside the vehicle 10, and may provide the image information to the automotive storage device 1000.

In an embodiment, the automotive storage device 1000 may store data. In an embodiment, the automotive storage device 1000 may be a solid-state drive (SSD). In an embodiment, the automotive storage device 1000 may store detection information including the brake pedal position information detected by the brake pedal sensor 400, the cell state information detected by the cell state sensor 2700, and the image information, detected by the first image sensor 511.

In an embodiment, the automotive storage device 1000 may detect a defect of the brake control unit 2100 based on the brake pedal position information. The automotive storage device 1000 may determine the braking value based on the brake pedal position information, and may detect the defect of the brake control unit 2100 based on the braking value determined by the automotive storage device 1000 and the braking value received from the brake control unit 2100 (e.g., based on a comparison result of the braking value determined by the automotive storage device 1000 and the braking value received from the brake control unit 2100).

In an embodiment, when the defect of the brake control unit 2100 is detected, the automotive storage device 1000 may control the brake 2200 such that the brake 2200 may perform the braking operation based on the braking value determined by the automotive storage device 1000.

In an embodiment, the automotive storage device 1000 may generate state-of-charge (SOC) information, state-of-health (SOH) information, and life-span information of the plurality of battery cells the based on cell state information. The state-of-charge information may be information representing a currently charged capacity compared to a maximum capacity of the plurality of battery cells. The state-of-health information may be information representing a current maximum capacity compared to an initial maximum capacity of the plurality of battery cells. The life-span information may be information predicting a period during which the plurality of battery cells can be used.

In an embodiment, the automotive storage device 1000 may detect a defect of the battery pack 2800 based on the cell state information. In an embodiment, the automotive storage device 1000 may detect battery cell of an overcharged or over-discharged state based on the cell state information. In an embodiment, the automotive storage device 1000 may control the cell state sensor 2700 to perform a cell balancing operation for decreasing a voltage difference between the plurality of battery cells based on the cell state information.

In an embodiment, the automotive storage device 1000 may generate object information identifying an object displayed in the image inside or outside the vehicle 10 based on the image information. In an embodiment, the object information may include information on a driver inside the vehicle 10, information on positions of other vehicles outside the vehicle 10, information on pedestrians, information on traffic signs, and/or information on drivable road regions. In an embodiment, the automotive storage device 1000 may provide the object information to the autonomous driving system 3000.

In an embodiment, the autonomous driving system 3000 may control an autonomous driving of the vehicle 10. In an embodiment, the autonomous driving system 3000 may control the speed of the vehicle 10 based on the object information received from the automotive storage device 1000.

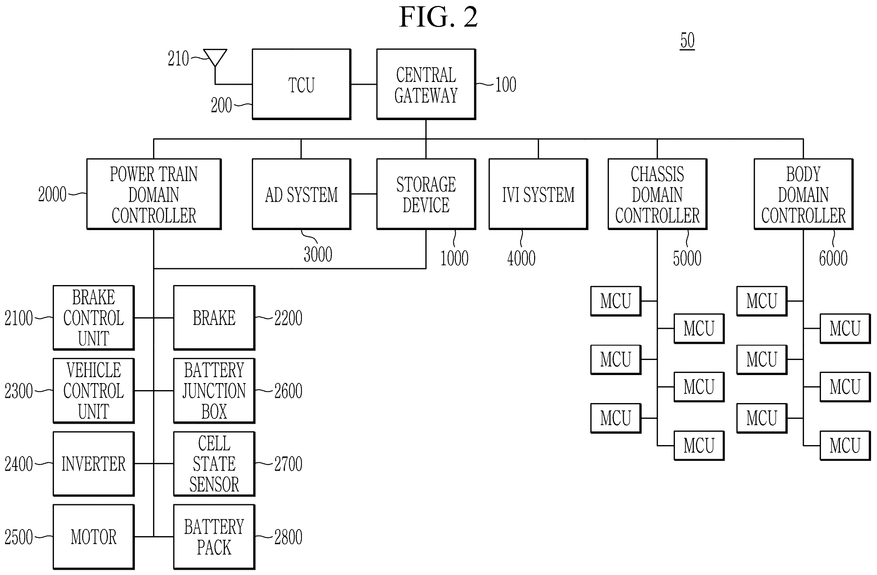

FIG. 2 is a drawing for explaining the vehicle system according to an embodiment.

Referring to FIG. 2, the vehicle system 50 may include a center gateway 100, a telematics communication unit 200, the storage device 1000, a powertrain domain controller 2000, the autonomous driving system 3000, an in-vehicle infotainment (IVI) system 4000, a chassis domain controller 5000, a body domain controller 6000, the brake control unit 2100, the brake 2200, a vehicle control unit 2300, an inverter 2400, a motor 2500, a battery junction box 2600, the cell state sensor 2700, and the battery pack 2800.

In an embodiment, the center gateway 100 may be connected to the telematics communication unit 200, the storage device 1000, the powertrain domain controller 2000, the autonomous driving system 3000, the in-vehicle infotainment system 4000, the chassis domain controller 5000, and the body domain controller 6000.

In an embodiment, the telematics communication unit 200 may communicate with an external server through an antenna 210. The telematics communication unit 200 may provide data generated inside the vehicle 10 to an external server through the antenna 210, or may receive data from an external server.

In an embodiment, the powertrain domain controller 2000 may control the brake control unit 2100, the brake 2200, the vehicle control unit 2300, the inverter 2400, a motor 2500, the battery junction box 2600, the cell state sensor 2700, and the battery pack 2800, which correspond to a powertrain area of the vehicle 10.

In an embodiment, the brake control unit 2100 may control the brake 2200 to decrease the speed of the vehicle 10 based on the brake pedal position information.

In an embodiment, the brake 2200 may be connected to the wheel of the vehicle 10. The brake 2200 may decrease the rotating speed of the wheel of the vehicle 10.

In an embodiment, the vehicle control unit 2300 may control the inverter 2400 such that the motor 2500 may perform rotational movement. In an embodiment, the vehicle control unit 2300 may control the inverter 2400 such that the motor 2500 may perform regenerative braking.

In an embodiment, the inverter 2400 may convert a voltage of the battery pack 2800 into a driving voltage, and may apply the driving voltage to the motor 2500.

In an embodiment, the motor 2500 may rotate the wheel of the vehicle 10 based on the driving voltage applied from the inverter 2400.

In an embodiment, the battery junction box 2600 may perform a control so that the battery pack 2800 may be connected to a charging terminal through which an external power source is supplied, or connected to the motor 2500.

In an embodiment, the cell state sensor 2700 may detect the state of the plurality of battery cells included in the battery pack 2800. In an embodiment, the cell state sensor 2700 may perform the cell balancing operation for decreasing the voltage difference between the plurality of battery cells.

In an embodiment, the battery pack 2800 may store the electrical energy used for driving the vehicle 10.

In an embodiment, the autonomous driving system 3000 may control the autonomous driving of the vehicle 10. In an embodiment, the autonomous driving system 3000 may control the autonomous driving of the vehicle 10 corresponding to the level of autonomous driving. In an embodiment, when the vehicle 10 performs autonomous driving of level one or level two, the autonomous driving system 3000 may control the autonomous driving of the vehicle 10 as an advanced driver-assistance system (ADAS) supporting a driver assistance or partial automation. In an embodiment, when the vehicle 10 performs autonomous driving of level three or higher, the autonomous driving system 3000 may control the autonomous driving of the vehicle 10 as a system supporting a conditional autonomous driving, high autonomous driving, or full autonomous driving.

In an embodiment, the autonomous driving system 3000 may generate the object information identifying the object inside or outside the vehicle 10 based on the image information inside or outside the vehicle 10 detected by a plurality of cameras, and may decrease or increase the speed of the vehicle 10 based on the object information.

In an embodiment, the in-vehicle infotainment system 4000 may output the image information representing movie, TV, navigation function, or the like, through a display within the vehicle 10.

In an embodiment, the chassis domain controller 5000 may control an operation related to a chassis area of the vehicle 10. The chassis domain controller 5000 may be connected to a plurality of micro control units (MCU)

In an embodiment, the body domain controller 6000 may control an operation related to a body area of the vehicle 10. The body domain controller 6000 may be connected to a plurality of MCUs.

In an embodiment, the automotive storage device 1000 may communicate with the brake control unit 2100, the brake 2200, the vehicle control unit 2300, the battery junction box 2600, and the cell state sensor 2700, which correspond to the powertrain area of the vehicle 10.

In an embodiment, the automotive storage device 1000 may generate the object information used in the autonomous driving of the vehicle 10, and may provide the object information to the autonomous driving system 3000.

In an embodiment, the automotive storage device 1000 may generate information on the state of the battery pack 2800, and may provide information on the state of the battery pack 2800 to an external server through the center gateway 100 and the telematics communication unit 200.

In an embodiment, the automotive storage device 1000 may detect the defect of the brake control unit 2100 and/or the battery pack 2800, and may provide an alarm signal notifying the defect of the brake control unit 2100 and/or the battery pack 2800 to the center gateway 100.

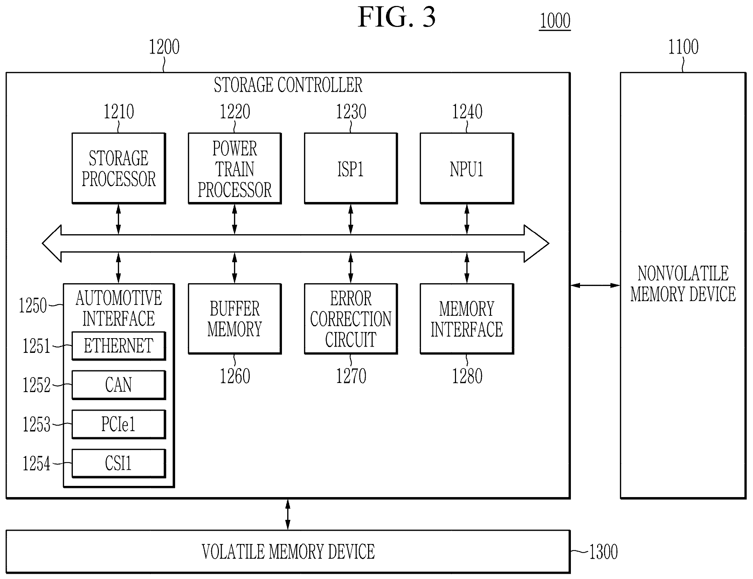

FIG. 3 is a drawing for explaining an automotive storage device according to an embodiment.

Referring to FIG. 3, the automotive storage device 1000 may include a non-volatile memory device 1100, a storage controller 1200, and a volatile memory device 1300.

In an embodiment, the non-volatile memory device 1100 may store data. The non-volatile memory device 1100 may operate in response to the control of the storage controller 1200. In an embodiment, the non-volatile memory device 1100 may be a NAND flash memory. The non-volatile memory device 1100 may include a plurality of memory blocks. The plurality of memory blocks each may include a plurality of memory cells storing data.

In an embodiment, the nonvolatile memory device 1100 may receive commands and addresses from the storage controller 1200, and may perform the operation, instructed by the command, on an area selected by the address. The nonvolatile memory device 1100 may perform a program operation (or a write operation) for storing data in the area selected by the address, a read operation for reading data, or an erase operation for deleting data.

The storage controller 1200 may control an overall operation of the automotive storage device 1000.

In an embodiment, the storage controller 1200 may control the non-volatile memory device 1100 to perform a write operation, a read operation, an erase operation, or the like. The storage controller 1200 may provide a write command, an address, and data to the nonvolatile memory device 1100 during the write operation. The storage controller 1200 may provide a read command and an address to the nonvolatile memory device 1100 during the read operation. The storage controller 1200 may provide an erase command and an address to the nonvolatile memory device 1100 during the erase operation.

In an embodiment, the storage controller 1200 may include a storage processor 1210, a powertrain processor 1220, a first image signal processor 1230, a first neural processing unit 1240, a vehicle interface 1250, a buffer memory 1260, an error correction circuit 1270, and a memory interface 1280.

In an embodiment, the storage processor 1210 may control an overall operation of the storage controller 1200. In an embodiment, the storage processor 1210 may control the non-volatile memory device 1100 such that the data received from the in-vehicle infotainment system 4000 may be stored in the non-volatile memory device 1100. In an embodiment, the storage processor 1210 may correspond to ASIL-B (Automotive Safety Integrity Level-B).

In an embodiment, the powertrain processor 1220 may determine the braking value for the speed of the vehicle 10 to decelerate based on the brake pedal position information received from the brake pedal sensor 400, and may generate the braking information representing the braking value. In an embodiment, the powertrain processor 1220 may generate the state-of-charge information, the state-of-health information, and/or the life-span information of the plurality of battery cells based on the cell state information received from the cell state sensor 2700. In an embodiment, the powertrain processor 1220 may control the non-volatile memory device 1100 such that the braking information, the state-of-charge information, the state-of-health information, and/or the life-span information may be stored in the non-volatile memory device 1100. In an embodiment, the powertrain processor 1220 may correspond to ASIL-D (Automotive Safety Integrity Level-D).

In an embodiment, the first image signal processor 1230 may generate image data based on (e.g., by processing) the image information inside or outside the vehicle received from the first camera 510.

In an embodiment, the first neural processing unit 1240 may generate the object information identifying an object displayed in the image inside or outside the vehicle 10 based on the image data generated by the first image signal processor 1230.

In an embodiment, the vehicle interface 1250 may include an ethernet interface 1251, a controller area network (CAN) interface 1252, a first Peripheral Component Interconnect express (PCle) interface 1253, and a first camera serial interface (CSI) 1254.

In an embodiment, the storage controller 1200 may communicate with the center gateway 100 through the ethernet interface 1251. In an embodiment, the storage controller 1200 may communicate with the brake control unit 2100, the brake 2200, the vehicle control unit 2300, the battery junction box 2600, and the cell state sensor 2700, which correspond to the powertrain area of the vehicle 10, through a CAN interface 1252. In an embodiment, the storage controller 1200 may communicate with the autonomous driving system 3000 through a first PCle the interface 1253.

In an embodiment, the first camera serial interface 1254 may be connected to the first camera 510. In an embodiment, the storage controller 1200 may communicate with the first camera 510 through the first camera serial interface 1254.

In an embodiment, the buffer memory 1260 may be used as a cache memory, an operating memory, or the like, of the storage controller 1200.

In an embodiment, the error correction circuit 1270 may perform an encoding operation generating parity data with respect to the data. The error correction circuit 1270 may perform an error correction operation with respect to data read from the non-volatile memory device 1100. The error correction operation may be an operation correcting error bits included in data read from the non-volatile memory device 1100.

In an embodiment, the memory interface 1280 may communicate with the nonvolatile memory device 1100 or the volatile memory device 1300. The memory interface 1280 may provide data to the non-volatile memory device 1100 or the volatile memory device 1300, or may receive data from the non-volatile memory device 1100 or the volatile memory device 1300.

In an embodiment, the volatile memory device 1300 may temporarily store data. In an embodiment, the volatile memory device 1300 may temporarily store the brake pedal position information, the cell state information, and the image information inside or outside the vehicle. In an embodiment, the volatile memory device 1300 may temporarily store information generated by the powertrain processor 1220, the first image signal processor 1230, the first neural processing unit 1240.

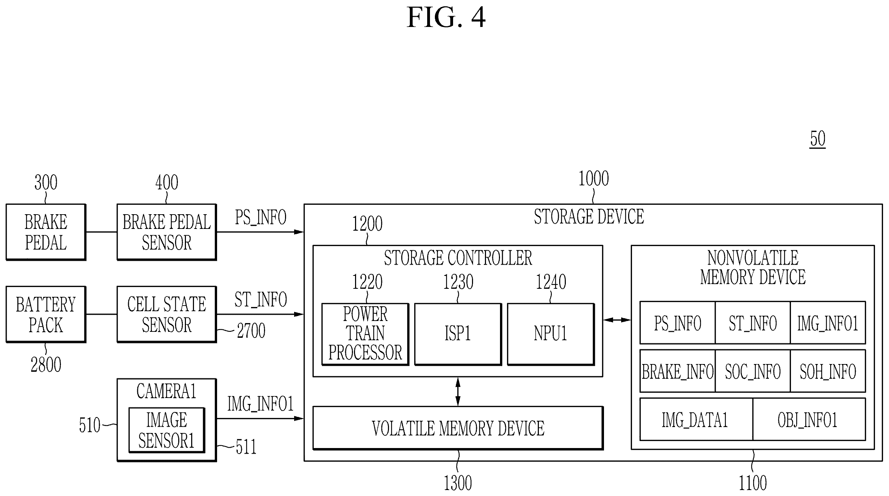

FIG. 4 is a drawing for explaining an automotive storage device configured to generate vehicle information based on the detection information received from a sensor and store the detection information and the vehicle information according to an embodiment.

Referring to FIG. 4, the brake pedal sensor 400 may detect the position of the brake pedal 300. The position of the brake pedal 300 may be changed by a driver who drives the vehicle. The brake pedal sensor 400 may generate a brake pedal position information PS_INFO based on the position of the brake pedal 300. The brake pedal sensor 400 may provide the brake pedal position information PS_INFO to the automotive storage device 1000.

In an embodiment, the cell state sensor 2700 may detect the voltage, current, and/or temperature of the plurality of battery cells included in the battery pack 2800. The cell state sensor 2700 may generate a cell state information ST_INFO representing the voltage, current, and/or temperature of the plurality of battery cells. The cell state sensor 2700 may provide the cell state information ST_INFO to the automotive storage device 1000.

In an embodiment, the first image sensor 511 included in the first camera 510 may detect the image inside or outside the vehicle 10. The first image sensor 511 may generate a first image information IMG_INFO1 detecting the image inside or outside the vehicle 10, and may provide the first image information IMG_INFO1 to the automotive storage device 1000.

In an embodiment, the storage controller 1200 may receive the detection information including the brake pedal position information PS_INFO, the cell state information ST_INFO, and/or the first image information IMG_INFO1, and may perform a control so that the detection information may be stored in the non-volatile memory device 1100.

In an embodiment, the powertrain processor 1220 may determine the braking value representing the speed of the vehicle 10 to decelerate based on the brake pedal position information PS_INFO, and may generate a braking information BRAKE_INFO representing the braking value.

In an embodiment, the powertrain processor 1220 may generate state-of-charge information SOC_INFO and state-of-health information SOH_INFO of the plurality of battery cells based on the cell state information ST_INFO.

In an embodiment, the first image signal processor 1230 may generate a first image data IMG_DATA1 based on (e.g., by processing) the first image information IMG_INFO1, and the first neural processing unit 1240 may generate first object information OBJ_INFO1 based on the first image data IMG_DATA1.

In an embodiment, the storage controller 1200 may generate the vehicle information including at least one of the braking information BRAKE_INFO, the state-of-charge information SOC_INFO, the state-of-health information SOH_INFO, the first image data IMG_DATA1, or the first object information OBJ_INFO1 based on the detection information, and may perform a control so that the vehicle information may be stored in the non-volatile memory device 1100.

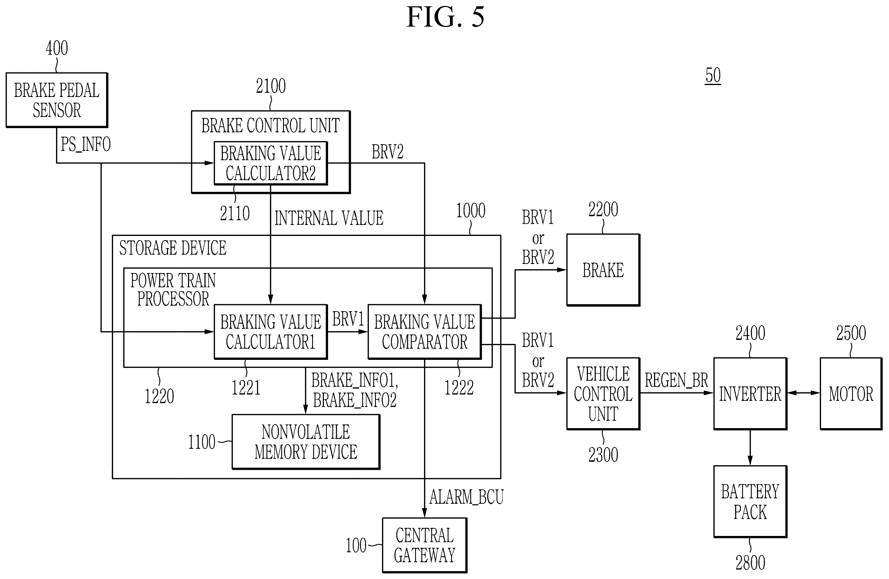

FIG. 5 is a drawing for explaining an automotive storage device configured to control a brake based on position information of the brake pedal according to an embodiment.

Referring to FIG. 5, the powertrain processor 1220 may include a first braking value calculator 1221 and a braking value comparator 1222. In an embodiment, the brake control unit 2100 may include a second braking value calculator 2110.

In an embodiment, the brake pedal sensor 400 may generate the brake pedal position information PS_INFO based on the position of the brake pedal 300, and may provide the brake pedal position information PS_INFO to the storage device 1000 and the brake control unit 2100.

In an embodiment, the powertrain processor 1220 may calculate a first braking value BRV1 based on the brake pedal position information PS_INFO, and the brake control unit 2100 may calculate a second braking value BRV2 based on the brake pedal position information PS_INFO. The first braking value BRV1 and the second braking value BRV2 each may be a value representing the speed of the vehicle 10 to decelerate.

In an embodiment, the powertrain processor 1220 may receive the second braking value BRV2 from the brake control unit 2100, and may control the non-volatile memory device 1100 such that first braking information BRAKE_INFO1 representing the first braking value BRV1 and/or a second braking information BRAKE_INFO2 representing the second braking value BRV2 may be stored in the non-volatile memory device 1100.

In an embodiment, the second braking value calculator 2110 may calculate the second braking value BRV2 based on the brake pedal position information PS_INFO. The second braking value calculator 2110 may provide an internal value INTERNAL VALUE used for an operation of the second braking value BRV2 to the first braking value calculator 1221. The second braking value calculator 2110 may provide the second braking value BRV2 to the braking value comparator 1222.

In an embodiment, the first braking value calculator 1221 may calculate the first braking value BRV1 based on the brake pedal position information PS_INFO received from the brake pedal sensor 400 and the internal value INTERNAL VALUE received from the second braking value calculator 2110. The first braking value calculator 1221 may provide the first braking value BRV1 to the braking value comparator 1222.

In an embodiment, the braking value comparator 1222 may provide the first braking value BRV1 or the second braking value BRV2 to the brake 2200 or the vehicle control unit 2300 based on the comparison result of the first braking value BRV1 and the second braking value BRV2.

In an embodiment, when a difference between the first braking value BRV1 and the second braking value BRV2 is greater than a desired (or alternatively, predetermined, threshold, or reference) value, the braking value comparator 1222 may identify that there is a defect in the brake control unit 2100. In an embodiment, when the difference between the first braking value BRV1 and the second braking value BRV2 is greater than the desired (or alternatively, predetermined) value, the braking value comparator 1222 may provide a notification signal ALARM_BCU notifying the defect of the brake control unit 2100 to the center gateway 100. The center gateway 100 may output the image information for notifying the defect of the brake control unit 2100 to the driver through a display within the vehicle 10 based on the notification signal ALARM_BCU.

In an embodiment, when the difference between the first braking value BRV1 and the second braking value BRV2 is greater than the desired (or alternatively, predetermined) value, the braking value comparator 1222 may provide the first braking value BRV1 to the brake 2200 or the vehicle control unit 2300.

In an embodiment, when the difference between the first braking value BRV1 and the second braking value BRV2 is greater than the desired (or alternatively, predetermined) value and the first braking value BRV1 is greater than a threshold braking value, the braking value comparator 1222 may provide the first braking value BRV1 to the brake 2200. The brake 2200 may perform the braking operation to decrease the rotating speed of the wheel of the vehicle 10 based on the first braking value BRV1.

In an embodiment, when the difference between the first braking value BRV1 and the second braking value BRV2 is greater than the desired (or alternatively, predetermined) value and the first braking value BRV1 is smaller than the threshold braking value, the braking value comparator 1222 may provide the first braking value BRV1 to the vehicle control unit 2300. The vehicle control unit 2300 may control the inverter 2400 such that the motor 2500 may perform regenerative braking based on the first braking value BRV1. When the first braking value BRV1 is received, the vehicle control unit 2300 may provide a control signal REGEN_BR for instructing regenerative braking of the motor 2500 to the inverter 2400.

In an embodiment, when the difference between the first braking value BRV1 and the second braking value BRV2 is smaller than the desired (or alternatively, predetermined) value, the braking value comparator 1222 may identify that there is not defect in the brake control unit. In an embodiment, when the difference between the first braking value BRV1 and the second braking value BRV2 is smaller than the desired (or alternatively, predetermined) value, the braking value comparator 1222 may provide the second braking value BRV2 to the brake 2200 or the vehicle control unit 2300.

In an embodiment, when the difference between the first braking value BRV1 and the second braking value BRV2 is smaller than the desired (or alternatively, predetermined) value and the second braking value BRV2 is greater than the threshold braking value, the braking value comparator 1222 may provide the second braking value BRV2 to the brake 2200. The brake 2200 may perform the braking operation to decrease the rotating speed of the wheel of the vehicle 10 based on the second braking value BRV2.

In an embodiment, when the difference between the first braking value BRV1 and the second braking value BRV2 is smaller than the desired (or alternatively, predetermined) value and the second braking value BRV2 is smaller than the threshold braking value, the braking value comparator 1222 may provide the second braking value BRV2 to the vehicle control unit 2300. The vehicle control unit 2300 may control the inverter 2400 such that the motor 2500 may perform regenerative braking based on the second braking value BRV2.

In an embodiment, the storage device 1000 may calculate the first braking value BRV1 based on the brake pedal position information PS_INFO detected by the brake pedal sensor 400, and may detect the defect of the brake control unit 2100 based on the first braking value BRV1. In an embodiment, when a defect occurs in the brake control unit 2100, the storage device 1000 may decrease the rotating speed of the wheel of the vehicle 10 by providing the first braking value BRV1 calculated by the powertrain processor 1220 to the brake 2200 or the vehicle control unit 2300.

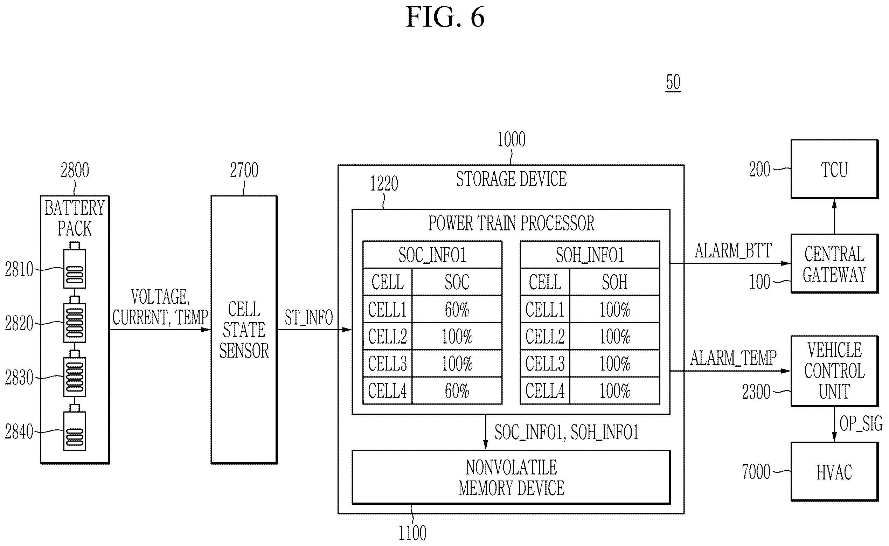

FIG. 6 is a drawing for explaining an automotive storage device configured to generate the state-of-charge information and the state-of-health information based on state information of a battery cell according to an embodiment.

Referring to FIG. 6, the battery pack 2800 may include the plurality of battery cells. The plurality of battery cells may include first to fourth battery cells 2810 to 2840. In an embodiment, the cell state sensor 2700 may detect voltage, current, and/or temperature TEM P of the first to fourth battery cells 2810 to 2840. The cell state sensor 2700 may generate the cell state information ST_INFO representing the voltage, current, and/or temperature of the first to fourth battery cells, and may provide the cell state information ST_INFO to the storage device 1000.

In an embodiment, the powertrain processor 1220 may generate a first state-of-charge information SOC_INFO1 of the first to fourth battery cells 2810 to 2840 based on the cell state information ST_INFO. In an embodiment, the first state-of-charge information SOC_INFO1 may be information representing that a state-of-charge of a first battery cell (CELL1) 2810 corresponds to 60%, a state-of-charge of a second battery cell (CELL2) 2820 corresponds to 100%, a state-of-charge of a third battery cell (CELL3) 2830 corresponds to 100%, and a state-of-charge of a fourth battery cell (CELL4) 2840 corresponds to 60%.

In an embodiment, the powertrain processor 1220 may generate first state-of-health information SOH_INFO1 of the first to fourth battery cells 2810 to 2840 based on the cell state information ST_INFO and the first state-of-charge information SOC_INFO1. In an embodiment, the first state-of-health information SOH_INFO1 may be information representing that the health status of each of the first to fourth battery cells 2810 to 2840 corresponds to 100%.

In an embodiment, the powertrain processor 1220 may control the non-volatile memory device 1100 such that the first state-of-charge information SOC_INFO1 and the first state-of-health information SOH_INFO1 may be stored in the non-volatile memory device 1100. In an embodiment, a powertrain processor 1220 may provide the first state-of-charge information SOC_INFO1 and the first state-of-health information SOH_INFO1 to an external server through the center gateway 100 and the telematics communication unit 200. In an embodiment, external server may detect a defect of the first to fourth battery cells 2810 to 2840 based on the first state-of-charge information SOC_INFO1 and the first state-of-health information SOH_INFO1, and may provide the notification signal notifying that there exists a defect to the telematics communication unit 200 through the center gateway 100.

In an embodiment, the powertrain processor 1220 may detect the defect of the first to fourth battery cells 2810 to 2840 based on the cell state information ST_INFO, the first state-of-charge information SOC_INFO1, and/or the first state-of-health information SOH_INFO1. In an embodiment, the powertrain processor 1220 may provide a notification signal ALARM_BTT notifying that a defect has occurred in the first to fourth battery cells 2810 to 2840 to the center gateway 100. The center gateway 100 may output the image information for notifying the defect of the battery pack 2800 to the driver through a display within the vehicle 10 based on the notification signal ALARM_BCU.

In an embodiment, the powertrain processor 1220 may detect a battery cell of the overcharged or over-discharged state among the first to fourth battery cells 2810 to 2840 based on the cell state information ST_INFO and the first state-of-charge information SOC_INFO1. In an embodiment, battery cell of an overcharged state may be a battery cell having a state-of-charge exceeding 100%. In an embodiment, a battery cell of the over-discharged state may be a battery cell having a state-of-charge less than 0%.

In an embodiment, the powertrain processor 1220 may block a voltage from being applied to a battery cell having a state-of-charge corresponding to a threshold state based on the cell state information ST_INFO and the first state-of-charge information SOC_INFO1. In an embodiment, the threshold state may be a state corresponding to a state-of-charge of 100%.

In an embodiment, the powertrain processor 1220 may identify a temperature of the battery pack 2800 based on the cell state information ST_INFO. In an embodiment, when the temperature of the battery pack 2800 is higher than a threshold temperature, the powertrain processor 1220 may provide a notification signal ALRAM_TEMP notifying the temperature of the battery pack 2800 to the vehicle control unit 2300. The vehicle control unit 2300 may provide an operation signal OP_SIG for commanding a heating, ventilation, and air conditioning (HVAC) system 7000 to operate based on the notification signal. A HVAC the system 7000 may decrease the temperature of the battery pack 2800 by driving a cooling system based on the operation signal OP_SIG.

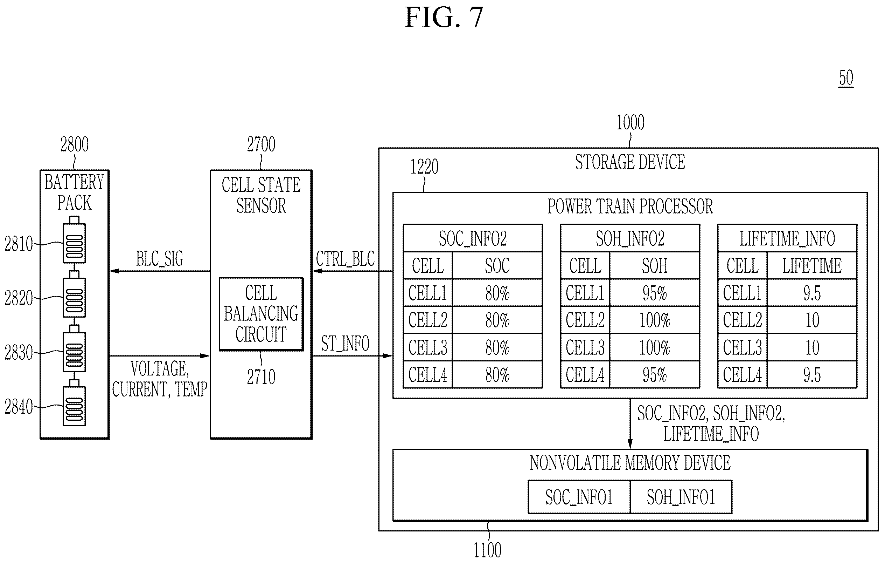

FIG. 7 is a drawing for explaining an automotive storage device configured to generate the life-span information based on state information of a battery cell according to an embodiment.

FIG. 7 will be described with reference to FIG. 6. Referring to FIG. 7, the cell state sensor 2700 may include a cell balancing circuit 2710. The cell balancing circuit 2710 may perform the cell balancing operation for decreasing the voltage difference between the plurality of battery cells.

In an embodiment, the powertrain processor 1220 may control the cell balancing circuit 2710 to perform the cell balancing operation based on the first state-of-charge information SOC_INFO1. In an embodiment, when a difference of state-of-charge between the first to fourth battery cells 2810 to 2840 is greater than a threshold or preset difference, the powertrain processor 1220 may provide a control signal CTRL_BLC for instructing the cell balancing operation to the cell balancing circuit 2710.

In an embodiment, the powertrain processor 1220 may control the cell balancing operation such that state-of-charges of the first to fourth battery cells 2810 to 2840 each may correspond to 80% based on a difference between the state-of-charge of each of the first battery cell (CELL1) 2810 and the fourth battery cell (CELL4) 2840 corresponding to 60% and the state-of-charge of each of the second battery cell (CELL2) 2820 and the third battery cell (CELL3) 2830 corresponding to 100% based on the first state-of-charge information SOC_INFO1.

In an embodiment, in response to the control signal CTRL_BLC, the cell balancing circuit 2710 may increase the state-of-charge of the first battery cell (CELL1) 2810 from 60% to 80%, may decrease the state-of-charge of the second battery cell (CELL2) 2820 from 100% to 80%, may decrease the state-of-charge of the third battery cell (CELL3) 2830 from 100% to 80%, and may increase the state-of-charge of the fourth battery cell (CELL4) 2840 from 60% to 80%.

In an embodiment, after performing the cell balancing operation, the cell state sensor 2700 may generate the cell state information ST_INFO representing the voltage, current, and temperature of the first to fourth battery cells 2810 to 2840, and may provide the cell state information ST_INFO to the storage device 1000.

In an embodiment, the powertrain processor 1220 may generate a second state-of-charge information SOC_INFO2 based on the cell state information ST_INFO. The second state-of-charge information SOC_INFO2 may be information generated after a desired (or alternatively, predetermined) time has elapsed from when the first state-of-charge information SOC_INFO1 is generated. In an embodiment, the second state-of-charge information SOC_INFO2 may be information representing that the state-of-charges of the first to fourth battery cells 2810 to 2840 each correspond to 80%.

In an embodiment, the powertrain processor 1220 may generate second state-of-health information SOH_INFO2 of the first to fourth battery cells 2810 to 2840 based on the cell state information ST_INFO and the second state-of-charge information SOC_INFO2. The second state-of-health information SOH_INFO2 may be information generated after a desired (or alternatively, predetermined) time has elapsed from when the first state-of-health information SOH_INFO1 is generated. In an embodiment, the second state-of-health information SOH_INFO2 may be information representing that the health status of each of the first battery cell (CELL1) 2810 and the fourth battery cell (CELL4) 2840 corresponds to 95%, and the health status of each of the third battery cell (CELL3) 2830 cell and the fourth battery cell (CELL4) 2840 corresponds to 100%.

In an embodiment, the powertrain processor 1220 may read the first state-of-health information SOH_INFO1 stored in the non-volatile memory device 1100, and may generate a life-span information LIFETIME_INFO predicting the life-span of the first to fourth battery cells 2810 to 2840 based on the first state-of-health information SOH_INFO1 and the second state-of-health information SOH_INFO2. In an embodiment, the life-span information LIFETIME_INFO may be information representing that the life-span of each of the first battery cell (CELL1) 2810 and the fourth battery cell (CELL4) 2840 corresponds to 9.5 years, and life-span of each of the second battery cell (CELL2) 2820 and the third battery cell (CELL3) 2830 corresponds to 10 years.

In an embodiment, the powertrain processor 1220 may generate the second state-of-charge information SOC_INFO2 based on the cell state information ST_INFO, may generate the second state-of-health information SOH_INFO2 based on the second state-of-charge information SOC_INFO2, and may generate the life-span information LIFETIME_INFO based on the first state-of-health information SOH_INFO1 and the second state-of-health information SOH_INFO2. In an embodiment, the powertrain processor 1220 may control the non-volatile memory device 1100 such that the second state-of-charge information SOC_INFO2, the second state-of-health information SOH_INFO2, and the life-span information LIFETIME_INFO may be stored in the non-volatile memory device 1100.

Although it has been described, in FIG. 6 and FIG. 7, that the storage device 1000 generates the state-of-charge information, the state-of-health information, and the life-span information in the battery cell units, the storage device 1000 may generate the state-of-charge information, the state-of-health information, and the life-span information, in the unit of a battery module including a plurality of battery cells or in the unit of a battery pack including a plurality of battery modules.

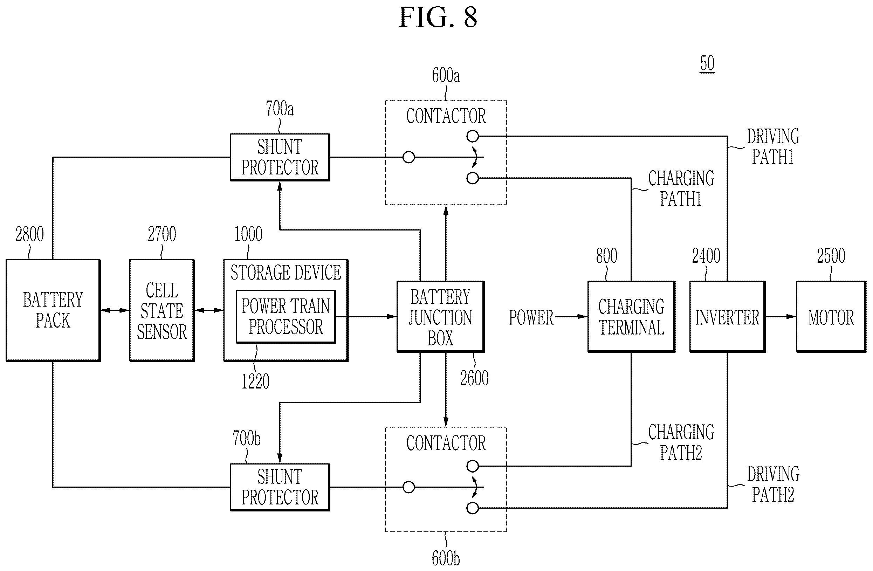

FIG. 8 is a drawing for explaining an automotive storage device configured to control the battery junction box according to an embodiment.

Referring to FIG. 8, the battery junction box 2600 may control a connection between the battery pack 2800 and a charging terminal 800 or a connection between the battery pack 2800 and an inverter 2500. The powertrain processor 1220 included in the storage device 1000 may control the battery junction box 2600.

In an embodiment, when an external power source POWER is supplied through the charging terminal 800, the powertrain processor 1220 may control the battery junction box 2600 so that the battery pack 2800 may be connected to charging paths CHARGING PATH1 and CHARGING PATH2 connected to the charging terminal 800. In an embodiment, the battery junction box 2600 may control contactors 600a and 600b so that the battery pack 2800 may be connected to the charging paths CHARGING PATH1 and CHARGING PATH2 according to a control of the powertrain processor 1220. When the battery pack 2800 and the charging paths CHARGING PATH1 and CHARGING PATH2 are connected, the battery pack 2800 may be charged by the external power source POWER supplied through the charging terminal 800.

In an embodiment, while the battery pack 2800 is being charged, the powertrain processor 1220 may receive the cell state information from the cell state sensor 2700. While the battery pack 2800 is being charged, the powertrain processor 1220 may generate the state-of-charge information of the plurality of battery cells included in the battery pack 2800 based on the cell state information.

In an embodiment, while the battery pack 2800 is being charged, the powertrain processor 1220 may detect a defect of the battery cell, such as the overcharged state, based on the state-of-charge information. In an embodiment, when a defect of the battery cell is detected while the battery pack 2800 is being charged, the powertrain processor 1220 may control the battery junction box 2600 so that the electrical connection between the battery pack 2800 and the charging paths CHARGING PATH1 and CHARGING PATH2 may be released.

In an embodiment, when the temperature of the battery pack 2800 becomes higher than a threshold temperature while the battery pack 2800 is being charged, the powertrain processor 1220 may control the battery junction box 2600 such that the electrical connection between the battery pack 2800 and the contactors 600a and 600b may be released in order to reduce or prevent fire. In an embodiment, the battery junction box 2600 may control shunt protectors 700a and 700b such that the electrical connection between the battery pack 2800 and the contactors 600a and 600b may be released according to the control of the powertrain processor 1220.

In an embodiment, when the supply of the external power source POWER is stopped, the powertrain processor 1220 may control the battery junction box 2600 so that the battery pack 2800 may be connected to driving paths DRIVING PATH1 and DRIVING PATH2 connected to the inverter 2400. The battery junction box 2600 may control the contactors 600a and 600b so that the battery pack 2800 may be connected to the driving paths DRIVING PATH1 and DRIVING PATH2 according to the control of the powertrain processor 1220. When the battery pack 2800 is connected to the driving paths DRIVING PATH1 and DRIVING PATH2, the inverter 2400 may convert the voltage of the battery pack 2800 into the driving voltage, and may apply the driving voltage to the motor 2500. The motor 2500 may perform rotational movement according to the driving voltage.

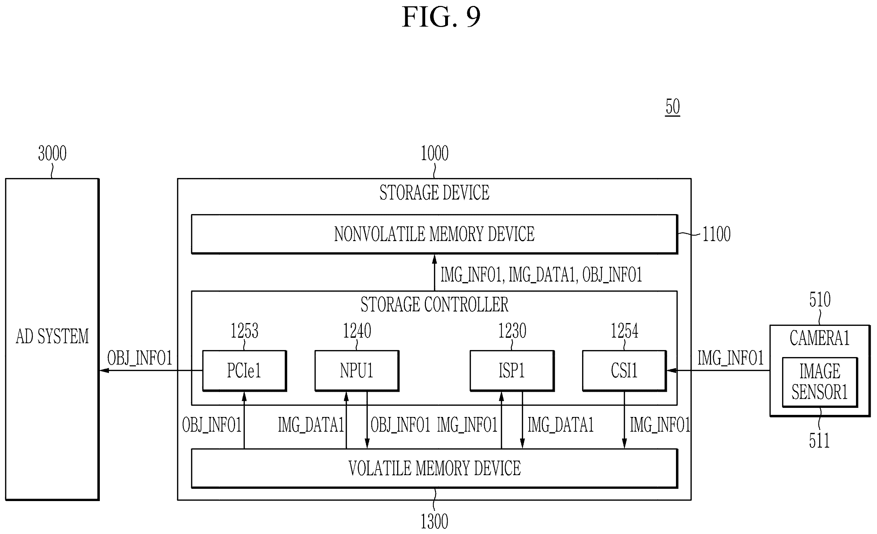

FIG. 9 is a drawing for explaining an automotive storage device configured to generate the first object information based on an image inside or outside the vehicle according to an embodiment.

Referring to FIG. 9, the first camera 510 may include the first image sensor 511. The first image sensor 511 may generate the first image information IMG_INFO1 detecting or based on a first image inside or outside the vehicle. The first image sensor 511 may provide the first image information IMG_INFO1 to the storage controller 1200.

In an embodiment, the first camera serial interface 1254 may receive the first image information IMG_INFO1 from the first image sensor 511, and may provide the first image information IMG_INFO1 to the volatile memory device 1300.

In an embodiment, the first image signal processor 1230 may read the first image information IMG_INFO1 from the volatile memory device 1300, and may generate the first image data IMG_DATA1 based on (e.g., by processing) the first image information IMG_INFO1. The first image signal processor 1230 may provide the first image data IMG_DATA1 to the volatile memory device 1300.

In an embodiment, the first neural processing unit 1240 may read the first image data IMG_DATA1 from the volatile memory device 1300, and may generate the first object information OBJ_INFO1 identifying an object displayed or included in the first image inside or outside the vehicle 10 based on the first image data IMG_DATA1. In an embodiment, the first neural processing unit 1240 may generate the first object information OBJ_INFO1 representing a driver inside the vehicle, the positions of other vehicles outside the vehicle, positions of pedestrians, traffic signs, drivable road regions, or the like displayed in the first image inside or outside the vehicle based on the first image data IMG_DATA1. The first neural processing unit 1240 may provide the first object information to the volatile memory device.

In an embodiment, the first PCle the interface 1253 may receive the first object information OBJ_INFO1 from the volatile memory device 1300, and may provide the first object information OBJ_INFO1 to the autonomous driving system 3000.

In an embodiment, the storage controller 1200 may receive the first image information IMG_INFO1 inside or outside the vehicle 10 detected by the first image sensor 511 included in the first camera 510, may generate the first image data IMG_DATA1 based on (e.g., by processing) the first image information IMG_INFO1, and may generate the first object information OBJ_INFO1 based on the first image data IMG_DATA1, and may provide the first object information OBJ_INFO1 to the autonomous driving system 3000. The storage controller 1200 may control the non-volatile memory device 1100 such that the first image information IMG_INFO1, the first image data IMG_DATA1, the first object information OBJ_INFO1 may be stored in the non-volatile memory device 1100.

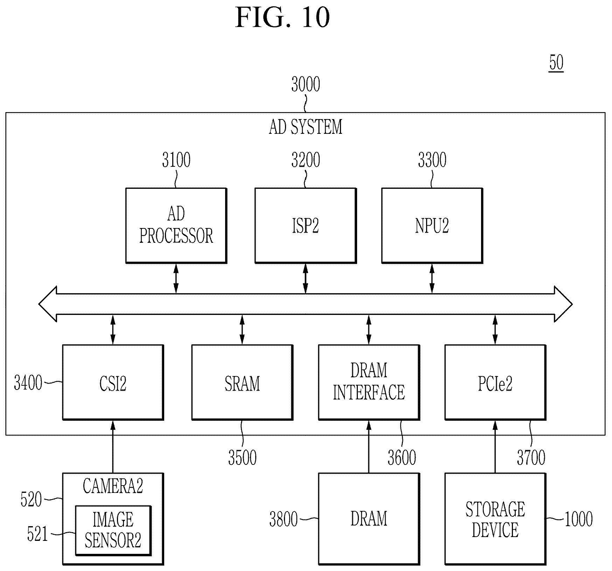

FIG. 10 is a drawing for explaining the autonomous driving system according to an embodiment.

Referring to FIG. 10, the autonomous driving system 3000 may include an autonomous driving processor 3100, a second image signal processor 3200, a second neural processing unit 3300, a second camera serial interface 3400, a static random-access memory (SRAM) 3500, a dynamic random-access memory (DRAM) interface 3600, and a second PCIe interface 3700.

In an embodiment, the autonomous driving processor 3100 may control an overall operation of the autonomous driving system 3000. The autonomous driving processor 3100 may control the speed of the vehicle 10 based on the object information identified in the image detected by the plurality of cameras within the vehicle 10.

In an embodiment, the second image signal processor 3200 may generate image data based on (e.g., by processing) the image inside or outside the vehicle 10 information received from a second camera 520.

In an embodiment, the second neural processing unit 3300 may generate the object information identifying an object displayed or included in the image inside or outside the vehicle 10 based on the image data generated by the second image signal processor 3200.

In an embodiment, the second camera serial interface 3400 may be connected to the second camera 520 including a second image sensor 521. The second camera serial interface 3400 may receive the image information representing the second image inside or outside the vehicle 10 detected by image sensor 521.

In an embodiment, a SRAM 3500 may be used as a cache memory, an operating memory, or the like, of the autonomous driving system 3000.

In an embodiment, a DRAM the interface 3600 may be connected to a DRAM 3800. The DRAM 3800 may temporarily store data generated by the autonomous driving system 3000.

In an embodiment, the second PCIe interface 3700 may be connected to the storage device 1000. The second PCIe interface 3700 may provide data generated by the autonomous driving system 3000 to the storage device 1000, or may receive data from the storage device 1000.

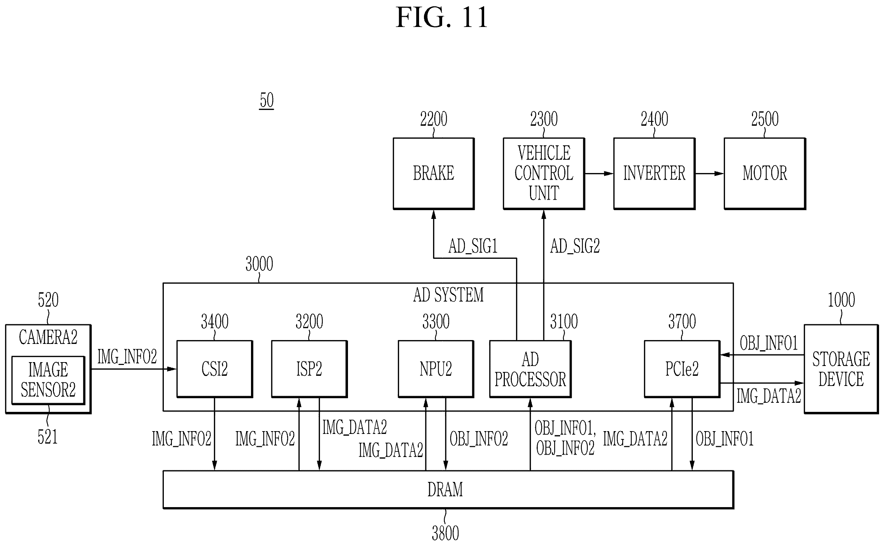

FIG. 11 is a drawing for explaining the autonomous driving system configured to control the speed of the vehicle based on the first object information and second object information according to an embodiment.

Referring to FIG. 11, the second image sensor 521 included in the second camera 520 may generate a second image information IMG_INFO2 detecting a second image inside or outside the vehicle 10. The second image sensor 521 may provide the second image information IMG_INFO2 to the autonomous driving system 3000.

In an embodiment, a second camera serial interface 3400 may receive the second image information IMG_INFO2, and may provide the second image information IMG_INFO2 to the DRAM 3800.

In an embodiment, the second image signal processor 3200 may read the second image information IMG_INFO2 from the DRAM 3800, and may generate a second image data IMG_DATA2 based on (e.g., by processing) the second image information IMG_INFO2. The second image signal processor 3200 may provide the second image data IMG_DATA2 to the DRAM 3800.

In an embodiment, the second neural processing unit 3300 may read the second image data IMG_DATA2 from the DRAM 3800, and may generate a second object information OBJ_INFO2 identifying an object displayed or included in the second image inside or outside the vehicle 10 based on the second image data IMG_DATA2. In an embodiment, the second object information OBJ_INFO2 may be information representing the positions of other vehicles outside the vehicle, the positions of pedestrians, traffic signs, drivable road regions, or the like, displayed or included in the second image inside or outside the vehicle 10. The second neural processing unit 3300 may provide the second object information OBJ_INFO2 to the DRAM 3800.

In an embodiment, the second PCIe interface 3700 may receive the first object information OBJ_INFO1 from the storage device 1000, and may provide the first object information OBJ_INFO1 to the DRAM 3800. The first object information OBJ_INFO1 may be information identifying the object displayed or included in the first image inside or outside the vehicle 10 detected by the first image sensor 511 included in the first camera 510. In an embodiment, the second PCIe interface 3700 may provide the second image data IMG_DATA2 to the storage device 1000 stored in the DRAM 3800. The storage device 1000 may store the second image data IMG_DATA2 to the non-volatile memory device 1100.

In an embodiment, the autonomous driving processor 3100 may read the first object information OBJ_INFO1 and the second object information OBJ_INFO2 from the DRAM 3800. In an embodiment, the autonomous driving processor 3100 may control the speed of the vehicle 10 based on the first object information OBJ_INFO1 and the second object information OBJ_INFO2.

In an embodiment, the autonomous driving processor 3100 may provide a first autonomous driving signal AD_SIG1 for decreasing the speed of the vehicle 10 based on the first object information OBJ_INFO1 and the second object information OBJ_INFO2 to the brake 2200. The brake 2200 may decrease the rotating speed of the wheel of the vehicle 10 in response to the first autonomous driving signal AD_SIG1.

In an embodiment, the autonomous driving processor 3100 may increase the speed of the vehicle 10 based on the first object information OBJ_INFO1 and the second object information OBJ_INFO2, or may provide a second autonomous driving signal AD_SIG2 for performing regenerative braking to the vehicle control unit 2300. The vehicle control unit 2300 may control the inverter 2400 such that the rotating speed of the motor 2500 may be increased or the motor 2500 may perform regenerative braking in response to the second autonomous driving signal AD_SIG2.

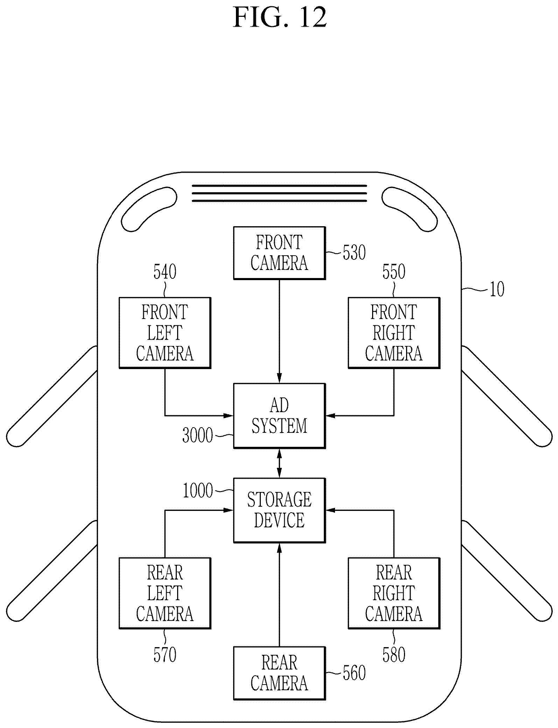

FIG. 12 is a drawing for explaining an automotive storage device and the autonomous driving system connected to the plurality of cameras according to an embodiment.

Referring to FIG. 12, the vehicle 10 may include the plurality of cameras. The plurality of cameras may be connected to the autonomous driving system 3000 or the storage device 1000.

In an embodiment, the plurality of cameras may include a front camera 530, a front-left camera 540, a front-right camera 550, a rear camera 560, a rear-left camera 570, and a rear-right camera 580. The front camera 530, the front-left camera 540, the front-right camera 550, the rear camera 560, the rear-left camera 570, and the rear-right camera 580 each may include an image sensor.

In an embodiment, the first camera 510 of FIG. 9 and the second camera 520 of FIG. 11 may be the front camera 530, the front-left camera 540, the front-right camera 550, the rear camera 560, the rear-left camera 570, or the rear-right camera 580.

In an embodiment, the front camera 530 may generate front image information by detecting a front image outside the vehicle 10. The front-left camera 540 may generate front-left image information by detecting a front-left image outside the vehicle 10. The front-right camera 550 may generate front-right image information by detecting a front-right image outside the vehicle 10.

In an embodiment, the rear camera 560 may generate rear image information by detecting a rear image outside the vehicle 10. The rear-left camera 570 may generate rear-left image information by detecting a rear-left image outside the vehicle 10. The rear-right camera 580 may generate rear-right image information by detecting a rear-right image outside the vehicle 10.

In an embodiment, the front camera 530, the front-left camera 540, and the front-right camera 550 may be connected to the autonomous driving system 3000. The autonomous driving system 3000 may receive the image information detected by the front camera 530, the front-left camera 540, and the front-right camera 550, and may generate front object information on an object displayed or included in front, front-left, and front-right images outside the vehicle 10 based on the image information.

In an embodiment, the rear camera 560, the rear-left camera 570, the rear-right camera 580 may be connected to the storage device 1000. The storage device 1000 may receive the image information detected by the rear camera 560, the rear-left camera 570, the rear-right camera 580, and may generate rear object information on an object displayed or included in rear, rear-left, and rear-right images outside the vehicle 10 based on the image information. The storage device 1000 may provide the rear object information to the autonomous driving system 3000.

In an embodiment, the autonomous driving system 3000 may control the speed of the vehicle based on the front object information generated by the autonomous driving system 3000 and/or the rear object information received from the storage device 1000.

In an embodiment, the storage device 1000 may receive the image information from some cameras among the plurality of cameras within the vehicle 10, may generate the object information based on the image information, and may provide the object information to the autonomous driving system 3000, thereby alleviating the data processing overload of the autonomous driving system 3000.

In another embodiment, the plurality of cameras within the vehicle 10 may be connected to the autonomous driving system 3000 and/or the storage device 1000 according to the position.

In another embodiment, the front camera 530 and the rear camera 560 may be connected to the autonomous driving system 3000, and the front-left camera 540, the front-right camera 550, the rear-left camera 570, the rear-right camera 580 may be connected to the storage device 1000.

In another embodiment, the front camera 530, the front-left camera 540, the front-right camera 550, and the rear camera 560 may be connected to the autonomous driving system 3000, and the rear-left camera 570, the rear-right camera 580 may be connected to the storage device 1000.

In another embodiment, the front camera 530, the front-left camera 540, the rear camera 560, the rear-left camera 570 may be connected to the autonomous driving system 3000, and the front-right camera 550 and the rear-right camera 580 may be connected to the storage device 1000.

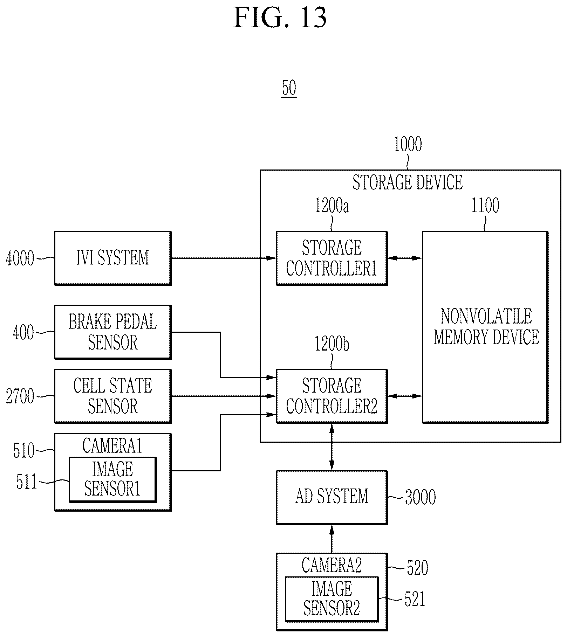

FIG. 13 is a drawing for explaining an automotive storage device including a plurality of storage controllers according to an embodiment.

Referring to FIG. 13, the storage device may include a plurality of controllers. In an embodiment, the storage device may include a first storage controller, a second storage controller, and the non-volatile memory device.

In an embodiment, a first storage controller 1200a may control the non-volatile memory device 1100 such that the data received from the in-vehicle infotainment system 4000 may be stored in the non-volatile memory device 1100. In an embodiment, the first storage controller 1200a may correspond to ASIL-B.

In an embodiment, a second storage controller 1200b may receive the detection information including the brake pedal position information, the cell state information, and a first image outside the vehicle information from the brake pedal sensor 400, the cell state sensor 2700, and the first image sensor 511 included in the first camera 510, respectively, and may generate the vehicle information including the braking information, the state-of-charge information, the state-of-health information, the life-span information, and the first object information based on the detection information. The second storage controller 1200b may control the non-volatile memory device 1100 such that the detection information and the vehicle information may be stored in the non-volatile memory device 1100. In an embodiment, the second storage controller 1200b may correspond to ASIL-D.

In an embodiment, the second storage controller 1200b may detect the defect of the brake control unit 2100 based on the braking information. The second storage controller 1200b may control a brake 2200 to perform the braking operation for decreasing a speed of a vehicle 10 based on the braking information. The second storage controller 1200b may provide the braking information to the vehicle control unit 2300 such that the motor 2500 may perform regenerative braking based on the braking information.

In an embodiment, the second storage controller 1200b may detect the defect of the battery pack 2800 based on the cell state information.

In an embodiment, the second storage controller 1200b may provide the first object information to the autonomous driving system 3000. The autonomous driving system 3000 may generate the second object information based on the second image information outside the vehicle 10 received from the second image sensor 521 included in the second camera 520, and may control the autonomous driving of the vehicle 10 based on the first object information and the second object information.

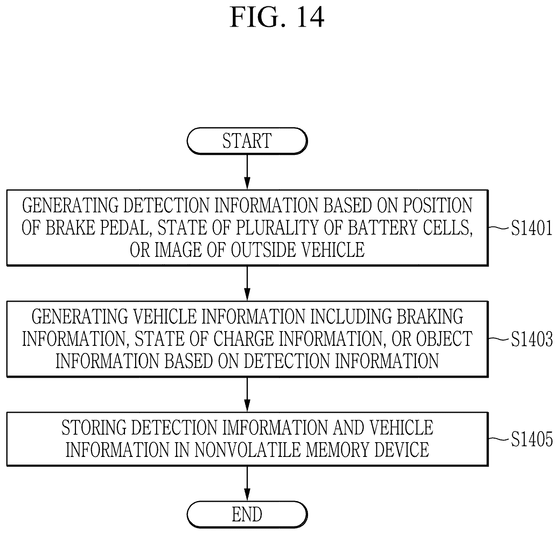

FIG. 14 is a flowchart for explaining an automotive storage device configured to generate the vehicle information based on the detection information received from a sensor and store the detection information and the vehicle information according to an embodiment.

Referring to FIG. 14, at step S1401, the sensor within the vehicle 10 may generate the detection information based on the position of the brake pedal, the state of the plurality of battery cells, and/or the image outside the vehicle. In an embodiment, the brake pedal sensor may generate the brake pedal position information based on the position of the brake pedal. The cell state sensor may generate the cell state information representing the voltage, current, and/or temperature of the plurality of battery cells. The image sensor included in the camera may generate the image information by detecting the image outside the vehicle 10. The brake pedal sensor, the cell state sensor, and camera may provide the detection information including the brake pedal position information, the cell state information, and the image information, respectively, to the automotive storage device 1000.

At step S1403, the automotive storage device 1000 may generate the vehicle information including at least one of the braking information, the state-of-charge information, or the object information based on the detection information. The automotive storage device 1000 may control a brake or detect a defect of the brake control unit based on the braking information. The automotive storage device 1000 may detect a defect of the battery based on the state-of-charge information. The automotive storage device 1000 may provide the object information to the autonomous driving system 3000.

At step S1405, the automotive storage device 1000 may store the detection information and the vehicle information in the non-volatile memory device 1100.

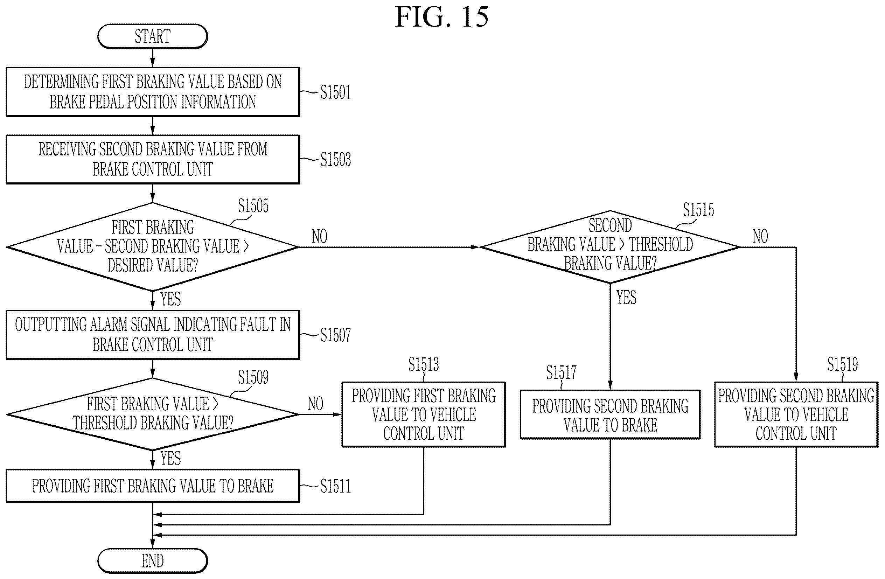

FIG. 15 is a flowchart for explaining an automotive storage device configured to control a brake based on position information of the brake pedal according to an embodiment.

Referring to FIG. 15, at step S1501, the automotive storage device 1000 may determine the first braking value based on the brake pedal position information. The first braking value may be a value representing the speed of the vehicle to decelerate.

At step S1503, the automotive storage device 1000 may receive the second braking value from the brake control unit. The brake control unit may determine the second braking value based on the brake pedal position information, and may provide the second braking value to the automotive storage device 1000.

At step S1505, the automotive storage device 1000 may compare whether the difference between the first braking value and the second braking value is greater than the desired (or alternatively, predetermined) value. When the difference between the first braking value and the second braking value is greater than the desired (or alternatively, predetermined) value, S1507 may be performed. When the difference between the first braking value and the second braking value is smaller than the desired (or alternatively, predetermined) value, S1515 may be performed.

At step S1507, when the difference between the first braking value and the second braking value is greater than the desired (or alternatively, predetermined) value, the automotive storage device 1000 may output the notification signal representing a defect of the brake control unit.

At step S1509, the automotive storage device 1000 may compare whether the first braking value is greater than the threshold braking value. When the first braking value is greater than the threshold braking value, S1511 may be performed. When the first braking value is smaller than the threshold braking value, S1513 may be performed.

At step S1511, when the first braking value is greater than the threshold braking value, the automotive storage device 1000 may provide the first braking value to brake. The brake may decrease the rotating speed of the wheel of the vehicle based on the first braking value.

At step S1513, when the first braking value is smaller than the threshold braking value, the automotive storage device 1000 may provide the first braking value to the vehicle control unit. The vehicle control unit may control the inverter such that the motor may perform regenerative braking based on the first braking value.

At step S1515, when the difference between the first braking value and the second braking value is smaller than the desired (or alternatively, predetermined) value, the automotive storage device 1000 may compare whether the second braking value is greater than the threshold braking value. When the second braking value is greater than the threshold braking value, S1517 may be performed. When the second braking value is smaller than the threshold braking value, S1519 may be performed.

At step S1517, when the second braking value is greater than the threshold braking value, the automotive storage device 1000 may provide the second braking value to brake. The brake may decrease the rotating speed of the wheel of the vehicle based on the second braking value.

At step S1519, when the second braking value is smaller than the threshold braking value, the automotive storage device 1000 may provide the second braking value to the vehicle control unit. The vehicle control unit may control the inverter such that the motor may perform regenerative braking based on the second braking value.

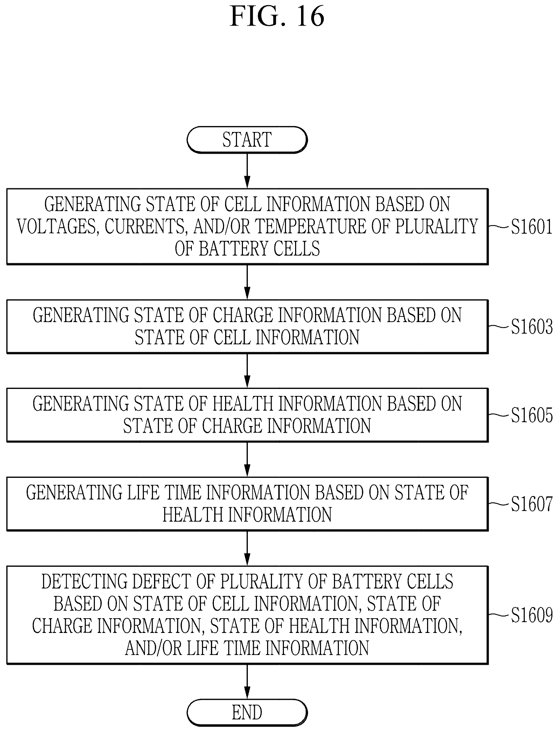

FIG. 16 is a flowchart for explaining an automotive storage device configured to detect defect of the plurality of battery cells based on state information of the plurality of battery cells according to an embodiment.

Referring to FIG. 16, at step S1601, a cell state sensor 2800 within the vehicle 10 may generate the cell state information based on the voltage, current, and/or temperature of the plurality of battery cells.

At step S1603, the automotive storage device 1000 may generate the state-of-charge information based on the cell state information.

At step S1605, the automotive storage device 1000 may generate the state-of-health information based on the state-of-charge information.

At step S1607, the automotive storage device 1000 may generate the life-span information based on the state-of-health information. The life-span information may be information predicting the life-span of the plurality of battery cells included in the battery pack.

At step S1609, the automotive storage device 1000 may detect the defect of the plurality of battery cells based on the cell state information, the state-of-charge information, the state-of-health information, and/or the life-span information. The automotive storage device 1000 may output the notification signal notifying the defect of the plurality of battery cells.

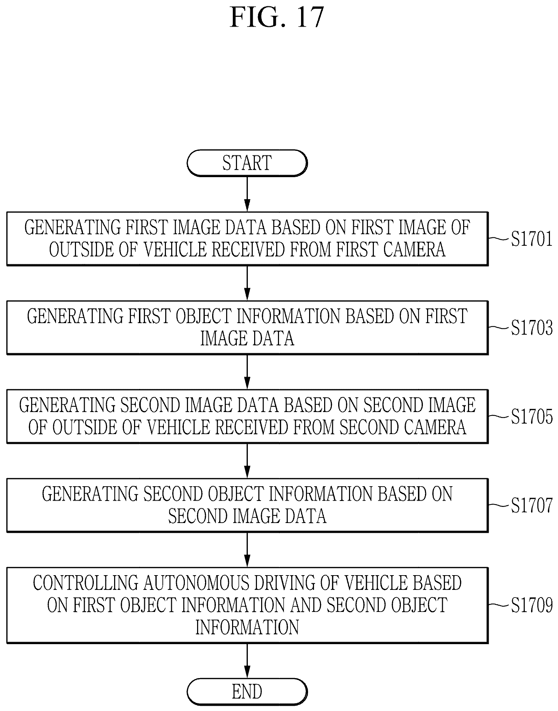

FIG. 17 is a flowchart for explaining the vehicle system configured to control autonomous driving of a vehicle based on the first object information generated by an automotive storage device and the second object information generated by an autonomous driving system according to an embodiment.

Referring to FIG. 17, at step S1701, the automotive storage device 1000 may generate the first image data based on the first image information received from the first camera by detecting the first image outside the vehicle 10. In an embodiment, when the first camera is located at a rear side of the vehicle 10, the first image may be a rear image of outside the vehicle 10.

At step S1703, the automotive storage device 1000 may generate the first object information based on the first image data. The first object information may be information identifying the object displayed or included in the first image outside the vehicle 10.

At step S1705, the autonomous driving system 3000 may generate the second image data based on the second image information received from the second camera by detecting a second image outside the vehicle 10. In an embodiment, when the second camera is located at the rear side of the vehicle 10, the second image may be a front image of outside the vehicle 10.

At step S1707, the autonomous driving system 3000 may generate the second object information based on the second image data.

At step S1709, the autonomous driving system 3000 may control the autonomous driving of the vehicle 10 based on the first object information and the second object information.

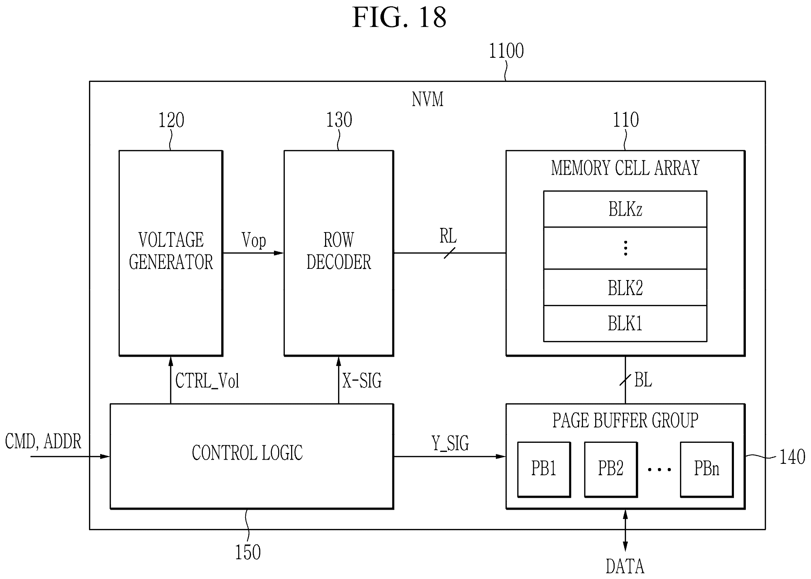

FIG. 18 is a drawing for explaining the non-volatile memory device according to an embodiment.

Referring to FIG. 18, the non-volatile memory device 1100 may include a memory cell array 110, a voltage generator 120, a row decoder 130, a page buffer group 140, and a control logic 150.

The memory cell array 110 may include a plurality of memory blocks BLK1 to BLKz. The plurality of memory blocks BLK1 to BLKz may be connected to the row decoder 130 through row lines RL. The plurality of memory blocks BLK1 to BLKz may be connected to the page buffer group 140 through bitlines BL. The plurality of memory blocks BLK1 to BLKz may include the plurality of memory cells, respectively. In an embodiment, the plurality of memory cells may be non-volatile memory cells.

The voltage generator 120 may generate operating voltages Vop by using the external power source voltage supplied to the non-volatile memory device 1100. The voltage generator 120 may operate in response to the control of the control logic 150.

In an embodiment, the voltage generator 120 may generate the operating voltages Vop used for the program operation, the read operation, and the erase operation. For example, the voltage generator 120 may generate a program voltage, a pass voltage, a read voltage, and an erase voltage. The operating voltages Vop may be supplied to the memory cell array 110 by the row decoder 130.

The row decoder 130 may be connected to the memory cell array 110 through the row lines RL. The row lines RL may include string selection lines, wordlines, and ground selection lines.

The row decoder 130 may operate in response to the control of the control logic 150. The row decoder 130 may receive a row signal X_SIG from the control logic 150. In an embodiment, the row decoder 130 may select at least one wordline among a plurality of wordlines based on the row signal X_SIG, and may apply the operating voltages Vop provided from the voltage generator 120 to at least one wordline.

In an embodiment, at the time of the program operation, the row decoder 130 may apply the program voltage to the selected wordline among the plurality of wordlines, and apply the pass voltage at a lower level than the program voltage, to the non-selected wordlines. At the time of a program verification operation, the row decoder 130 may apply a verification voltage to the selected wordline, and apply a verification pass voltage at a higher level than the verification voltage, to the non-selected wordlines.

At the time of the read operation, the row decoder 130 may apply the read voltage to the selected wordline, and apply a read pass voltage at a higher level than the read voltage to the non-selected wordlines.

The page buffer group 140 may include a plurality of page buffers PB1 to PBn. The plurality of page buffers PB1 to PBn may be connected to the plurality of memory cells included in the memory cell array 110 through the bitlines BL, respectively. The plurality of page buffers PB1 to PBn may operate in response to the control of the control logic 150.

In an embodiment, the plurality of page buffers PB1 to PBn may receive data DATA from the storage controller 1200. The plurality of page buffers PB1 to PBn may select at least one bitline among the bitlines BL based on a column signal Y_SIG received from the control logic 150.

In an embodiment, at the time of the program operation, the plurality of page buffers PB1 to PBn may transfer the data received from the storage controller 1200 to a plurality of memory cells of the memory cell array 110 through the bitlines BL. The plurality of memory cells may be programmed according to the received data. The plurality of page buffers PB1 to PBn may sense the data stored in the plurality of memory cells through at the time of the program verification operation, the bitlines BL.

At the time of the read operation, the plurality of page buffers PB1 to PBn may sense the data stored in the memory cells through the bitlines BL, and store the sensed data in the plurality of page buffers PB1 to PBn.

The control logic 150 may be connected to the voltage generator 120, the row decoder 130, the page buffer group 140, and a read level register group 160.

The control logic 150 may control an overall operation of the non-volatile memory device 1100. In response to a command received from a storage controller 1300, the control logic 150 may control the voltage generator 120, the row decoder 130, and the page buffer group 140 to perform an operation corresponding to the command.

Any functional blocks shown in the figures and described above may be implemented in processing circuitry such as hardware including logic circuits, a hardware/software combination such as a processor executing software, or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims.

## Claims

1. A vehicle system for a vehicle having
a sensor (400, 2700, 510) configured to detect at least one of, a position of a brake pedal (300), a state of a plurality of battery cells (2810 - 2840), or a first image outside a vehicle (10), and generate detection information;
the vehicle system comprising, an automotive storage device (1000) comprising a storage controller (1200) and a non-volatile memory device (1100), wherein
the storage controller (1200) is configured to generate vehicle information based on the detection information, the vehicle information comprising at least one of first braking information (BRAKE_INFO1), state-of-charge information of the plurality of battery cells (2810 - 2840), or first object information (OBJ_INFO1) outside the vehicle (10), and
the non-volatile memory device (1100) configured to store the detection information and the vehicle information according to a control of the storage controller (1200).

2. The vehicle system of claim 1 for a vehicle further comprising
a brake (2200) and a motor (2500);
the vehicle system further comprising:
a vehicle control unit (2300) configured to control a regenerative braking of the motor (2500); and
a brake control unit (2100) configured to generate a second braking information based on the detection information (BRV2),
wherein the storage controller (1200) comprises a powertrain processor (1220), the powertrain processor (1220) configured to receive the second braking information (BRAKE_INFO2) and provide a first braking value (BRV1) or a second braking value (BRV2) to the brake (2200) or the vehicle control unit (2300) based on the first braking value (BRV1) represented by the first braking information (BRAKE_INFO1) and the second braking value (BRV2) represented by the second braking information (BRAKE_INFO2).

3. The vehicle system of claim 2, wherein the powertrain processor (1220) is configured to provide the first braking value (BRV1) to the brake (2200) or the vehicle control unit (2300), when a difference between the first braking value (BRV1) and the second braking value (BRV2) is greater than a desired value.

4. The vehicle system of claim 3, wherein the powertrain processor (1220) is configured to
provide the first braking value (BRV1) to the brake (2200) when the first braking value (BRV1) is greater than a threshold braking value, and
provide the first braking value (BRV1) to the vehicle control unit (2300) when the first braking value (BRV1) is smaller than the threshold braking value.

5. The vehicle system of claim 2, 3, or 4, wherein the powertrain processor (1220) is configured to output a notification signal for notifying a defect of the brake control unit (2100), when a difference between the first braking value (BRV1) and the second braking value (BRV2) is greater than a desired value.

6. The vehicle system of any one of claims 1 to 5, for a vehicle further comprising a first camera (510) comprising the sensor (511),
wherein the storage controller (1200) comprises:
a first camera serial interface (1254) connected to the first camera, and
a first image processor (1230) configured to generate first image data (IMG_DATA1) based on the detection information.

7. The vehicle system of claim 6, wherein the storage controller (1200) further comprises a first neural processing unit (1240), the first neural processing unit (1240) configured to generate the first object information (OBJ_INFO1) identifying an object included in the first image outside the vehicle (10) based on the first image data (IMG_DATA1).

8. The vehicle system of claim 7, wherein the first object information (OBJ_INFO1) comprises information on at least one of other vehicles, pedestrians, or traffic signs outside the vehicle (10).

9. The vehicle system of claim 6, 7, or 8, the vehicle further comprising a second camera (520) comprising a second image sensor (521); and
wherein the vehicle system comprises an autonomous driving system (3000) connectable to the second camera (520) through a second camera serial interface (3400),
wherein the storage controller (1200) comprises a Peripheral Component Interconnect express, PCIe, interface (3700), the PCIe interface (3700) configured to provide the first object information (OBJ_INFO1) to the autonomous driving system.

10. The vehicle system of claim 9, wherein the autonomous driving system (3700) comprises:
a second image processor (3200) configured to generate second image data (IMG_DATA2) based on a second image outside the vehicle (10) that is detected by the second camera (520);
a second neural processing unit (3300) configured to generate second object information (OBJ_INFO2) based on the second image data (IMG_DATA2) , the second object information (ONJ_INFO2) identifying an object included in the second image; and
an autonomous driving processor (3100) configured to output a control signal for controlling a speed of the vehicle (10) based on the first object information (OBJ_INFO1) and the second object information (OBJ_INFO2).

11. The vehicle system of any one of claims 1 to 10, the vehicle further comprising a battery pack (2800) comprising the plurality of battery cells (2810 - 2840),
wherein the sensor (2700) is configured to generate at least one of voltage, current, or temperature of the plurality of battery cells (2810 - 2840) as the detection information, and
wherein the storage controller (1200) comprises a powertrain processor (1220), the powertrain processor (1220) configured to generate first state-of-health information of the plurality of battery cells (2810 - 2840) based on the detection information and the state-of-charge information.

12. The vehicle system of claim 11, wherein the powertrain processor (1220) is configured to generate life-span information based on the first state-of-health information and second state-of-health information, the second state-of-health information generated before the first state-of-health information, the life-span information predicting a life-span of the plurality of battery cells (2810 - 2840).

13. The vehicle system of claim 11 or 12, wherein the powertrain processor (1220) is configured to detect a battery cell of an overcharged or over-discharged state among the plurality of battery cells (2810 - 2840) based on the state-of-charge information.

14. The vehicle system of claim 11, 12 or 13, wherein the powertrain processor (1220) is configured to control the sensor (2700) to perform a cell balancing operation based on the state-of-charge information, the cell balancing operation being an operation of decreasing a voltage difference between the plurality of battery cells (2810 - 2840).

15. The vehicle system of claim 11, for a vehicle further including battery junction box (2600) configured to connect the battery pack (2800) to a charging terminal through a charging path,
wherein the powertrain processor (1220) is configured to
detect a defect of the plurality of battery cells (2810 - 2840) based on the state-of-charge information, and
control the battery junction box (2600) to release an electrical connection between the battery pack (2800) and the charging path.
